# DEMANDE DE BREVET EUROPEEN

(11) **EP 1 578 177 A1**
(43) Date de publication de la demande: **21.09.2005**
(21) Numéro de dépôt: 04300156.9
(22) Date de dépôt: 19.03.2004
(51) Int. Cl.: H05H 1/34, B23K 10/00

(54) **Procédé de coupage plasma avec double flux de gaz**

(71) Demandeur: LA SOUDURE AUTOGENE FRANCAISE, 75321 Paris Cedex 07 (FR); L'Air Liquide S. A. à Directoire et Conseil de Surveillance pour l'Etude et l'Exploitation des Procédés Georges Claude, 75321 Paris Cedex 07 (FR)
(72) Inventeur: Baillot, Edmond, 95550 Bessancourt (FR); Delzenne, Michel, 95130 Franconville (FR)
(74) Mandataire: Pittis, Olivier

(57) **Abrégé**

L'invention porte sur un procédé de coupage par arc plasma d'une pièce métallique, dans lequel on met en oeuvre une torche à double flux de gaz munie d'une électrode avec insert émissif, ladite torche délivrant un flux central de gaz et un flux annulaire périphérique de gaz, ledit flux annulaire étant délivré périphériquement au flux central de gaz, caractérisé en ce que le flux central de gaz contient un mélange d'hydrogène et d'azote, et le flux périphérique de gaz contient du dioxyde de carbone. Installation comprenant une telle torche.

## Description

La présente invention concerne un procédé de coupage par arc plasma d'une pièce métallique au moyen d'une torche de type double flux de gaz munie d'une électrode avec insert émissif, et installation comprenant une telle torche.

Le procédé de découpe des aciers de construction, c'est-à-dire les aciers au carbone non alliés ou faiblement alliés, voire des aciers inoxydables et des alliages d'aluminium, par arc plasma sous atmosphère d'oxygène est connu depuis de nombreuses années.

Un dispositif de coupage plasma apte à mettre en oeuvre un tel procédé comprend généralement une torche de coupage plasma comprenant une tuyère d'éjection de l'arc plasma vers la pièce de travail à couper, une électrode formant cathode, placée à distance de la tuyère et coaxialement à celle-ci, une alimentation en gaz plasmagène, tel que de l'air comprimé, de l'oxygène ou tout autre mélange de gaz comportant au moins un gaz oxydant, et un moyen de distribution du gaz plasmagène dans le volume séparant l'électrode de la tuyère, encore appelé chambre plasmagène.

La pièce de travail forme, quant à elle, l'anode, la cathode et l'anode étant reliées aux bornes d'un générateur de courant.

Plusieurs types de procédés et torches de découpe à l'arc plasma sont couramment utilisés dans l'industrie.

Ainsi, il existe des torches à mono-injection de gaz plasmagène, encore appelées torches mono-flux ou simple flux, lesquelles délivrent un flux unique de gaz, par exemple formé d'un gaz oxydant, tel que l'oxygène ou un mélange d'azote et d'oxygène dans des proportions identiques ou différentes de celles de l'air.

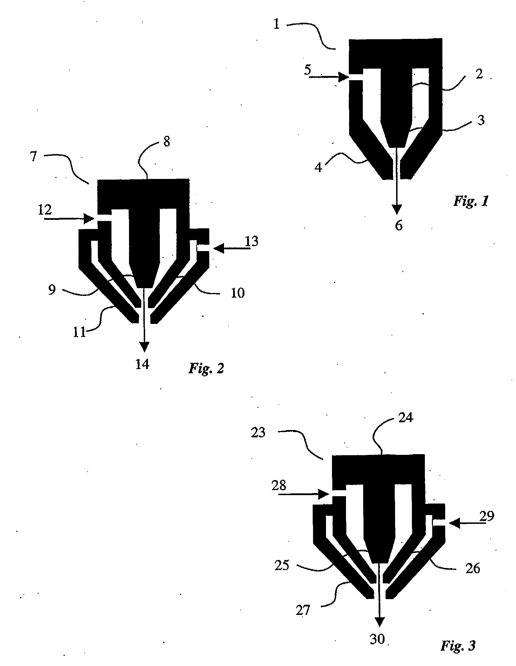

Une torche mono-flux est schématisée en Figure 1. Cette torche 1 comprend une électrode 2 dotée d'un insert émissif 3, réalisé en zirconium ou en hafnium, lequel est enchâssé ou serti à l'extrémité du corps de l'électrode 2, une tuyère 4 et un ou plusieurs passages 5 d'entrée de gaz pour l'alimentation en gaz plasmagène oxydant de la chambre plasmagène délimitée par l'électrode 2 et la paroi interne de la tuyère 4.

Lors de l'utilisation de la torche, l'arc plasma 6 prenant naissance au niveau de l'insert 3 émissif s'étend de l'électrode 2, 3 au travers de la tuyère 4, vers la pièce de travail à couper située en dessous de la torche (non représentée).

Par ailleurs, il existe aussi des torches à double injection de gaz plasmagène, encore appelées torches double flux.

Une torche double flux est schématisée en Figure 2. Cette torche 7 comprend, comme celle de la figure 1, une électrode 8 munie d'un insert émissif 9, une première tuyère 10 et un premier passage 12 d'entrée de gaz pour l'alimentation de la chambre plasmagène en un premier gaz plasmagène.

Cependant, dans ce cas, la torche 7 comporte aussi une seconde tuyère 11 et un deuxième passage 13 pour l'alimentation en un second gaz plasmagène, qui peut être lui aussi oxydant, par exemple de l'air comprimé, de l'oxygène ou un mélange d'azote et d'oxygène dans des proportions autres que celles de l'air.

Dans ce cas, l'arc plasma 14 formé s'étend de l'électrode 8, 9 au travers des première et deuxième tuyères 10,11 vers la pièce de travail (non représentée).

La mise en oeuvre de ces différentes torches produit des résultats de coupe susceptibles de satisfaire l'industrie mais ont tous en commun d'utiliser des électrodes à durée de vie très limitée.

En effet, du fait de l'atmosphère gazeuse oxydante dans laquelle baigne l'électrode, celle-ci doit être dotée d'un élément émissif en zirconium ou en hafnium qui n'a qu'une durée de vie très limitée, typiquement de 1 à 4 heures environ, selon le nombre d'amorçages ou de cycles de coupage réalisés.

Il est à souligner que, dans le cas des procédés de coupage utilisant des gaz oxydant, le tungstène, bien qu'ayant une température d'évaporation élevée, de l'ordre de 5660°C ne peut pas être utilisé comme élément émissif car en présence d'oxygène, il forme des oxydes à basse température de sublimation, par exemple d'environ 800°C pour un oxyde de tungstène de type W₃O₈, conduisant à une destruction extrêmement rapide de l'électrode.

Pour tenter de résoudre ce problème, un procédé à double injection de gaz plasmagène, l'un non oxydant et l'autre oxydant, a été proposé.

Selon ce procédé, on utilise une torche identique à celle de la figure 2, dans laquelle la chambre plasmagène est alimentée en un gaz plasmagène non oxydant, tel de l'azote, alors que la seconde tuyère est alimentée en gaz plasmagène oxydant, en particulier de l'oxygène, comme exposé dans le document WO-A-99/53734.

Si ce procédé permet d'obtenir une durée de vie notablement supérieure à celle obtenue classiquement avec des électrodes en hafnium sous atmosphère oxydante, il est apparu en pratique que les qualités et les performances de coupe obtenues du fait de la création d'un arc plasma dans un mélange résultant d'azote et d'oxygène, sont très voisines de celles obtenues par un procédé à mono-injection d'air comprimé, c'est-à-dire très inférieures à celles procurées classiquement par les procédés à mono-injection d'oxygène ou par les procédés à double injection de deux gaz oxydants, par exemple de l'oxygène entre l'électrode et une première tuyère et un mélange d'azote et d'oxygène, dont la proportion d'oxygène est supérieure à celle de l'air, entre la première et la deuxième tuyères.

Le problème qui se pose alors est d'améliorer les procédés de coupage plasma de manière à pouvoir obtenir une qualité et des performances de coupe au moins égales à celles classiquement obtenues avec les procédés et torches mettant en oeuvre des gaz plasmagènes oxydants, c'est-à-dire du type des procédés à mono-injection d'oxygène ou encore du type des procédés à double injection de gaz oxydant, mais en garantissant une durée de vie de l'électrode nettement supérieure, préférentiellement d'une durée de vie au moins double, à celle obtenue classiquement avec des électrodes en hafnium sous atmosphère oxydante.

La solution de l'invention est alors un procédé de coupage par arc plasma d'une pièce métallique, dans lequel on met en oeuvre une torche à double flux de gaz munie d'une électrode avec insert émissif, ladite torche délivrant un flux central de gaz et un flux annulaire de gaz, ledit flux annulaire étant délivré périphériquement au flux central de gaz, caractérisé en ce que le flux central de gaz contient un mélange d'hydrogène et d'azote, et le flux périphérique de gaz contient du dioxyde de carbone.

Le mélange d'hydrogène et d'azote peut être préparé à l'avance dans les proportions désirées, par exemple sous une forme conditionnée en bouteilles de gaz ou dans des réservoirs de plus grande capacité, ou alors être préparé sur site, en fonction des besoins, à partir de gaz "purs" qui sont mélangés dans des proportions désirées au moyen d'un mélangeur de gaz par exemple agencé en amont de la torche de coupage, relié aux bouteilles de gaz "purs" et contrôlé par un automate programmable.

Selon le cas, le procédé de l'invention peut comprendre l'une ou plusieurs des caractéristiques techniques suivantes :
- le flux périphérique de gaz contient au moins 50% en volume de dioxyde de carbone, de préférence de 80 % à 100 % de dioxyde de carbone.
- le flux central de gaz contient de 1,5 à 60% en volume d'hydrogène, de préférence de 4 à 10 % d'hydrogène.
- le flux central de gaz est constitué de 1.5 à 60% en volume d'hydrogène et l'azote pour le reste.
- l'insert émissif est formé de tungstène ou d'un alliage contenant majoritairement du tungstène.
- l'électrode est réalisée en cuivre ou en un alliage de cuivre, en particulier en alliage cuivre-tellure ou cuivre-chrome-zirconium.
- la pièce à couper est en acier de construction, en acier inoxydable ou alliage d'aluminium, de préférence en acier de construction.
- il comprend, en outre, les étapes de :
   (a) introduire un premier flux de gaz entre une première tuyère de la torche et l'électrode de manière à obtenir le flux central de gaz,
   (b) générer un arc électrique sur l'électrode à insert émissif,
   (c) introduire un second flux de gaz entre une seconde tuyère de la torche et la première tuyère de manière à obtenir le flux annulaire de gaz, l'étape (c) pouvant être préalable ou subséquente à l'étape (b),
   (d) délivrer le flux central de gaz et le flux annulaire de gaz en direction d'une pièce à couper sous la forme d'un jet d'arc plasma contenant les flux central et annulaire de gaz, et l'arc électrique, et
   (e) percer et/ou couper la pièce au moyen du jet d'arc plasma de l'étape (d).
- le débit et la pression du flux central de gaz et du flux annulaire périphérique de gaz sont choisis ou ajustés en fonction de l'épaisseur à couper.

L'invention porte aussi sur une installation de coupage plasma comprenant :
- une torche à double flux de gaz munie d'une électrode avec insert émissif, une première tuyère agencée autour de l'électrode en formant avec ladite électrode une chambre plasmagène, une seconde tuyère agencée coaxialement à la première tuyère en formant avec ladite première tuyère un espace inter-tuyères,
- une première source de gaz contenant un mélange d'hydrogène et d'azote en communication fluidique avec la chambre plasmagène de manière à pouvoir alimenter ladite chambre plasmagène en ledit mélange gazeux à base d'hydrogène et d'azote, et
- une deuxième source de gaz contenant du dioxyde de carbone en communication fluidique avec l'espace inter-tuyères de manière à pouvoir alimenter l'espace inter-tuyères en ledit dioxyde de carbone gazeux.

Le procédé de l'invention mettant en oeuvre une torche de coupage plasma du type à double injection de gaz plasmagène est schématisé sur la figure 3.

Schématiquement, sur la Figure 3, on voit une torche 23 de coupage plasma double flux comprenant une électrode 24 en cuivre ou alliage de cuivre, dotée à son extrémité aval d'un insert émissif 25, réalisé en tungstène, une première tuyère 26 avec un premier passage 28 d'entrée de gaz pour une alimentation en un premier gaz plasmagène non oxydant, à savoir un mélange d'azote et d'hydrogène (1,5 à 60% vol. d'hydrogène), une seconde tuyère 27 et un second passage 29 d'entée de gaz pour une alimentation en un second gaz plasmagène oxydant, tel que du dioxyde de carbone (CO₂ ou un mélange de gaz contenant au moins 50% de dioxyde de carbone.

L'arc plasma 30 formé sur l'insert émissif 25 s'étend, au travers des orifices de sortie des tuyères 26 et 27, depuis l'électrode 24 vers la pièce de travail située en dessous (non représentée).

L'insert est préférentiellement de forme cylindrique à extrémité plate affleurant l'extrémité de l'électrode en cuivre ou alliage de cuivre. Il a une longueur de 3 mm à 10 mm et un diamètre de 1 mm à 5 mm selon l'intensité du courant de l'arc plasma. L'insert émissif peut être également formé d'un barreau affûté en pointe en saillie de l'extrémité du corps d'électrode en cuivre ou alliage de cuivre.

Le mélange hydrogène/azote est injecté, via le premier passage 28 d'entrée de gaz, dans l'espace situé entre l'électrode 24 et la première tuyère 26, cet espace étant généralement appelé chambre plasmagène.

Ce mélange H₂/N₂ a pour premier effet de constricter l'arc plasma dès la racine cathodique sur l'insert émissif 25 et de lui conférer un meilleure stabilité que sous azote pur, et a pour deuxième effet d'augmenter le transfert thermique vers la pièce de travail et ainsi d'accroître les performances de l'arc plasma.

Le mélange H₂/N₂ est délivré par la torche sous la forme d'un flux de gaz central plasmagène contenant non seulement le gaz mais aussi l'arc électrique, ce flux plasmagène central se présentant sous une forme de colonne d'arc plasma.

Le flux de dioxyde de carbone, injecté via le passage 29, dans l'espace situé entre la première tuyère 26 et la deuxième tuyère 27, aussi appelé espace inter-tuyères, de par ses propriétés physiques, à pour premier effet de constricter l'arc plasma par échange thermique avec le flux central à base de H₂/N₂ contenant l'arc, et d'autoriser ainsi une grande densité de courant dans la deuxième tuyère en repoussant la limite de formation d'arc double, et a pour deuxième effet de libérer des atomes d'oxygène, lors de sa dissociation partielle dans l'arc plasma.

Une telle libération d'atomes d'oxygène est bénéfique car ces atomes, d'une part, fluidifient le métal fondu par réduction des tensions de surface et, d'autre part, apportent dans une certaine mesure une contribution thermique par oxy-combustion du fer contenu dans la pièce de travail.

Le deuxième flux de gaz contenant le dioxyde de carbone est délivré périphériquement au premier flux central de gaz, c'est-à-dire de manière à former une sorte de gainage annulaire autour du flux central.

Au final, le procédé de l'invention procure des qualités et des vitesses de coupe au moins égales à celles obtenues par les procédés classiques à puissance électrique équivalente mais avec un avantage supplémentaire, à savoir de conduire à des durées de vie d'électrodes de plus du double de celles jusqu'alors connues avec les procédés classiques du type à électrode en hafnium sous atmosphère oxydante, ce qui conduit à une augmentation de la productivité des machines de coupage plasma, par réduction importante des temps d'arrêt pour changement d'électrode, et à une diminution du coût d'exploitation par une importante réduction du nombre d'électrodes nécessaires à une production.

### Exemple

Une torche de coupage plasma référencée OCP 150 commercialisée par LA SOUDURE AUTOGENE FRANCAISE a été équipée de deux tuyères coaxiale comme montré sur la figure 3, d'une électrode en cuivre allié munie d'un insert en tungstène et a été soumise ensuite à une succession de séquences de coupe jusqu'à obtenir une usure extrême de l'insert et/ou de l'électrode.

Le gaz plasmagène de coupe mis en oeuvre, lors de ces essais, est formé d'un flux central contenant 10 % d'hydrogène et 90 % d'azote (% en volume) et d'un flux annulaire de dioxyde de carbone pur.

Le matériau à travailler est une plaque en acier de construction de 10 mm d'épaisseur. L'intensité du courant de coupe est de 120 Ampères.

Ces essais ont montré qu'une électrode selon l'invention avait une durée de vie de l'ordre de 10 heures avec 1250 amorçages, ce qui correspond à 2,5 fois la durée de vie des électrodes à insert en hafnium pur dans des conditions de travail analogues.

## Revendications

1. Procédé de coupage par arc plasma d'une pièce métallique, dans lequel on met en oeuvre une torche à double flux de gaz munie d'une électrode avec insert émissif, ladite torche délivrant un flux central de gaz et un flux annulaire périphérique de gaz, ledit flux annulaire étant délivré périphériquement au flux central de gaz, **caractérisé en ce que** le flux central de gaz contient un mélange d'hydrogène et d'azote, et le flux périphérique de gaz contient du dioxyde de carbone.

2. Procédé selon la revendication 1, **caractérisé en ce que** le flux périphérique de gaz contient au moins 50% en volume de dioxyde de carbone, de préférence de 80 % à 100 % de dioxyde de carbone.

3. Procédé selon l'une des revendications 1 ou 2, **caractérisé en ce que** le flux central de gaz contient de 1,5 à 60% en volume d'hydrogène, de préférence de 4 à 10 % d'hydrogène.

4. Procédé selon l'une des revendications 1 à 3, **caractérisé en ce que** le flux central de gaz est constitué de 1.5 à 60% en volume d'hydrogène et l'azote pour le reste.

5. Procédé selon l'une des revendications 1 à 4, **caractérisé en ce que** l'insert émissif est formé de tungstène ou d'un alliage contenant majoritairement du tungstène.

6. Procédé selon l'une des revendications 1 à 5, **caractérisé en ce que** l'électrode est réalisée en cuivre ou en un alliage de cuivre, en particulier en alliage cuivre-tellure ou cuivre-chrome-zirconium.

7. Procédé selon l'une des revendications 1 à 6, **caractérisé en ce que** la pièce à couper est en acier de construction, en acier inoxydable ou alliage d'aluminium, de préférence en acier de construction.

8. Procédé selon l'une des revendications 1 à 7, **caractérisé en ce qu'**il comprend, en outre, les étapes de :
(a) introduire un premier flux de gaz entre une première tuyère de la torche et l'électrode de manière à obtenir le flux central de gaz,
(b) générer un arc électrique sur l'électrode à insert émissif,
(c) introduire un second flux de gaz entre une seconde tuyère de la torche et la première tuyère de manière à obtenir le flux annulaire de gaz, l'étape (c) pouvant être préalable ou subséquente à l'étape (b),
(d) délivrer le flux central de gaz et le flux annulaire de gaz en direction d'une pièce à couper sous la forme d'un jet d'arc plasma contenant les flux central et annulaire de gaz, et l'arc électrique, et
(e) percer et/ou couper la pièce au moyen du jet d'arc plasma de l'étape (d).

9. Procédé selon l'une des revendications 1 à 8, **caractérisé en ce que** le débit et la pression du flux central de gaz et du flux annulaire périphérique de gaz sont choisis ou ajustés en fonction de l'épaisseur à couper.

10. Installation de coupage plasma comprenant :
- une torche à double flux de gaz munie d'une électrode avec insert émissif, une première tuyère agencée autour de l'électrode en formant avec ladite électrode une chambre plasmagène, une seconde tuyère agencée coaxialement à la première tuyère en formant avec ladite première tuyère un espace inter-tuyères,
- une première source de gaz contenant un mélange d'hydrogène et d'azote en communication fluidique avec la chambre plasmagène de manière à pouvoir alimenter ladite chambre plasmagène en ledit mélange gazeux à base d'hydrogène et d'azote, et
- une deuxième source de gaz contenant du dioxyde de carbone en communication fluidique avec l'espace inter-tuyères de manière à pouvoir alimenter l'espace inter-tuyères en ledit dioxyde de carbone gazeux.
